# EUROPEAN PATENT APPLICATION

(11) **EP 4 346 107 A1**
(43) Date of publication of application: **03.04.2024**
(21) Application number: 22198325.7
(22) Date of filing: 28.09.2022
(51) Int. Cl.: H04B 1/16, H04B 1/00

(54) **FLEXIBLE BANDWIDTHS**

(71) Applicant: Nokia Technologies Oy, 02610 Espoo (FI)
(72) Inventor: NIELSEN, Kim, Storvorde (DK); RYSGAARD, Bent Henneberg, Aalborg (DK); BLÜCHER BRINK, Stig, Aalborg Øst (DK); DHERE, Amol, Gistrup (DK)
(74) Representative: Nokia EPO representatives

(57) **Abstract**

An apparatus comprising:
a first reception path comprising a first low noise amplifier;
multiple downstream receiver circuitry;
a switching arrangement configured to, in a first state, couple the first reception path to
one of the multiple downstream receiver circuitry and configured to, in a second state, simultaneously couple the first reception path to a plurality of the multiple downstream receiver circuitry;
a controller configured to place the switching arrangement in the second state to support reception of a first bandwidth, wherein the switching arrangement is configured in the second state to enable processing of the received first bandwidth as a plurality of overlapping bandwidths wherein each of the plurality of overlapping bandwidths is processed via one of the plurality of the multiple downstream receiver circuitry.

## Description

### TECHNOLOGICAL FIELD

Examples of the disclosure relate to an apparatus, system, method, computer program that provide flexible bandwidths.

### BACKGROUND

Current user equipment transceiver architectures use predefined bandwidths specified in the appropriate telecommunications standard.

### BRIEF SUMMARY

The inventors have realized that it is desirable to use non-standard bandwidths to utilize available spectrum better.

The inventors have been able to create dynamic bandwidth extension using the predefined bandwidths.

The bandwidth extension enables the use of bandwidths intermediate of the existing predefined bandwidths. The extended bandwidth can be extended in an analogue fashion without quantization. This enables the efficient utilization of licensed spectrum that is not aligned with existing bandwidths.

The bandwidth extension enables non-contiguous intraband carrier aggregation where parallel processing for different carriers, avoids intercarrier interference.

According to various, but not necessarily all, examples there is provided an apparatus comprising:
a first reception path comprising a first low noise amplifier;
multiple downstream receiver circuitry;
a switching arrangement configured to, in a first state, couple the first reception path to
one of the multiple downstream receiver circuitry and configured to, in a second state, simultaneously couple the first reception path to a plurality of the multiple downstream receiver circuitry;
a controller configured to place the switching arrangement in the second state to support reception of a first bandwidth, wherein the switching arrangement is configured in the second state to enable processing of the received first bandwidth as a plurality of overlapping bandwidths wherein each of the plurality of overlapping bandwidths is processed via one of the plurality of the multiple downstream receiver circuitry.

According to some but not necessarily all examples, the controller is configured to place the switching arrangement in the second state, to support reception of the first bandwidth, in dependence upon a received network communication configuring the received first bandwidth.

According to some but not necessarily all examples, the controller is configured to determine a state of the switching arrangement in dependence upon any one or more of:
network requirements as regards non-contiguous intraband carrier aggregation;
network configured irregular bandwidth;
availability of downstream receiver circuitry;
interference, if any, in frequencies adjacent the received first bandwidth.

According to some but not necessarily all examples, the controller is configured to determine how to enable processing of the received first bandwidth as the plurality of overlapping bandwidths.

According to some but not necessarily all examples, the apparatus is configured to apply, to each of the plurality of overlapping bandwidths before processing via one of the pluralities of the multiple downstream receiver circuitry, filtration having a bandwidth less than the received first bandwidth.

According to some but not necessarily all examples, the received first bandwidth is an irregular channel bandwidth and does not match any preset regular filter bandwidth and each of the plurality of overlapping bandwidths does match a preset regular filter bandwidth.

According to some but not necessarily all examples, the apparatus is configured to control relative frequency offsets applied to the plurality of overlapping bandwidths before processing via the multiple downstream receiver circuitry.

According to some but not necessarily all examples, each of the multiple downstream receiver circuitry is configured for separate demodulation of a respective overlapping bandwidth.

According to some but not necessarily all examples, the controller is configured to: place the switching arrangement in a second state in dependence upon a determination that more than one downstream receiver circuitry is available and there is interference in frequencies adjacent the received first bandwidth, and isolate the plurality of separated bandwidths using filters, individually having a bandwidth equal to the separated bandwidths, for separate digital demodulation;
place the switching arrangement in a first state in dependence upon a determination that more than one downstream receiver circuitry is not available or determination that there is not sufficient interference in frequencies adjacent the received first bandwidth, and apply a filter, having a bandwidth greater than or equal to the first received bandwidth, to receive the bandwidth, for digital demodulation.

According to some but not necessarily all examples, the controller is configured to: update capability information provided to a network in dependence upon a determination that more than one downstream receiver circuitry is not available and there is interference in frequencies adjacent the received first bandwidth.

According to some but not necessarily all examples, the switching arrangement is configured to enable coupling of the first reception path to first downstream receiver circuitry by selectively coupling a first upstream node coupled to the first reception path and a first downstream node coupled to the first downstream receiver circuitry and disable coupling of the first reception path to the first downstream receiver circuitry by selectively decoupling the first upstream node and the first downstream node and terminating the first upstream node to ground and the first downstream node to ground;

According to some but not necessarily all examples, the apparatus comprises a second reception path comprising a second low noise amplifier, wherein the controller is configured to
enable coupling of the second reception path to the first downstream receiver circuitry by selectively coupling a second upstream node coupled to the second reception path and a second downstream node coupled to the downstream receiver circuitry and disable coupling of the second reception path to the first downstream receiver circuitry by selectively decoupling the second upstream node and the second downstream node and terminating the second upstream node to ground and the second downstream node to ground.

According to some but not necessarily all examples, the switching arrangement comprises:
a first switching circuitry configured to have a first switching state that enables coupling of the first reception path to the first downstream receiver circuitry and a second switching state that disables coupling of the first reception path to the first downstream receiver circuitry;
a second switching circuitry configured to have a first switching state that enables coupling of the second reception path to the first downstream receiver circuitry and a second switching state that disables coupling of the second reception path to the first downstream receiver circuitry,
wherein a switching state that couples the first reception path but not the second reception path to the first downstream receiver circuitry comprises a first switching state of the first switching circuitry and a second switching state of the second switching circuitry; and
a switching state that couples the second reception path but not the first reception path to the first downstream receiver circuitry comprises a second switching state of the first switching circuitry and a first switching state of the second switching circuitry.

According to some but not necessarily all examples, the switching arrangement is configured in one state to couple the second reception path to one of the multiple downstream receiver circuitry or in another state simultaneously couple the second reception path to a plurality of the multiple downstream receiver circuitry.

According to some but not necessarily all examples, the apparatus is configured to simultaneously couple the first reception path and the second reception path to the same downstream receiver circuitry.

According to various, but not necessarily all, examples there is provided a method comprising:
splitting a reception path associated with a received bandwidth into a plurality of reception paths associated with overlapping bandwidths; and
processing each of the plurality of reception paths via different downstream receiver circuitry.

According to various, but not necessarily all, examples there is provided a computer program comprising instructions that when run by one or more processors causes a switching arrangement to split a reception path associated with a received bandwidth into a plurality of reception paths associated with overlapping bandwidths and enable processing each of the plurality of reception paths via different downstream receiver circuitry.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1A shows an example of the subject matter described herein;
FIG. 1B shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8A shows another example of the subject matter described herein;
FIG. 8B shows another example of the subject matter described herein;
FIG. 9 shows another example of the subject matter described herein;
FIG. 10 shows another example of the subject matter described herein;
FIG. 11 shows another example of the subject matter described herein;
FIG. 12 shows another example of the subject matter described herein;
FIG. 13 shows another example of the subject matter described herein;
FIG. 14 shows another example of the subject matter described herein;
FIG. 15 shows another example of the subject matter described herein.
FIG. 16 shows another example of the subject matter described herein.
FIG. 17 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g., 10) and a specific instance of the class (member of the set) can be referenced using the reference number with a numerical type subscript index (e.g., 10_1) and a non-specific instance of the class (member of the set) can be referenced using the reference number with a variable type subscript index (e.g., 10_i).

### DETAILED DESCRIPTION

In the following description a class (or set) can be referenced using a reference number without a subscript index e.g. 30 and an instance of the class (member of the set) can be referenced using a reference number with a particular subscript index e.g. 30_1, 30_2 etc.

The FIGs illustrate various examples of an apparatus 10 comprising:
a first reception path 12 comprising a first low noise amplifier 14;
multiple downstream receiver circuitry 30;
a switching arrangement 40 configured to, in a first state 41, couple the first reception path 12 to one of the multiple downstream receiver circuitry 30_1 and configured to, in a second state 42, simultaneously couple the first reception path 12 to a plurality of the multiple downstream receiver circuitry 30_1, 30_2;

The second state 42 supports reception of a received bandwidth 19. In the second state 42, the switching arrangement 40 is configured to enable processing of the received bandwidth 19 as a plurality of overlapping bandwidths 19_1, 19_2. Each of the plurality of overlapping bandwidths19_1, 19_2 is processed via a different one of the plurality of the multiple downstream receiver circuitry 30_1, 30_2.

The apparatus 10 is controlled by a controller 400 configured to control the state of the switching arrangement 40 and configured to place the switching arrangement 40 in the second state 42.

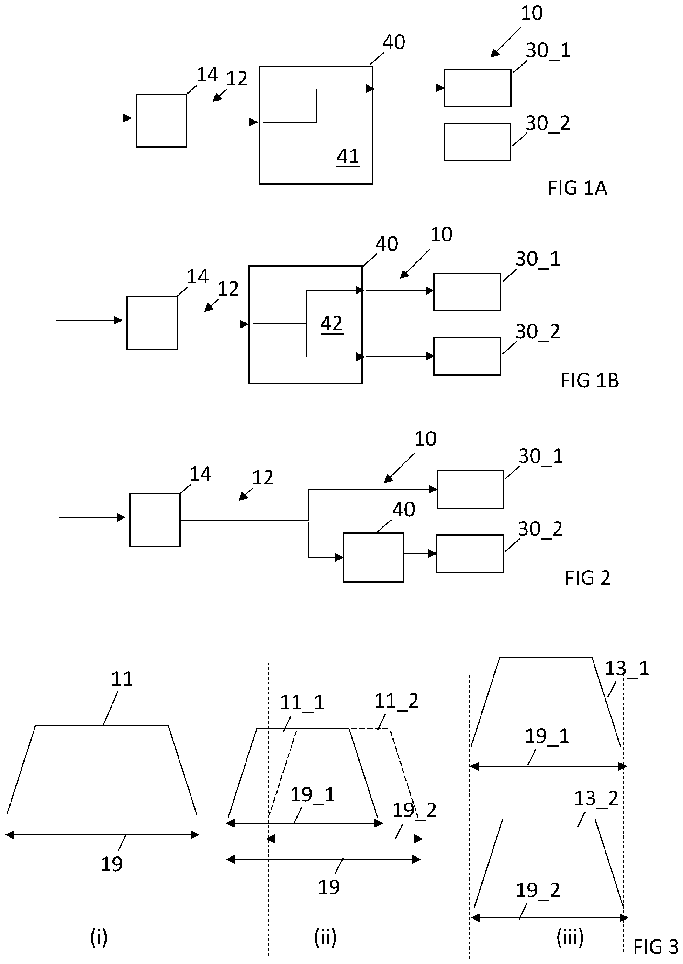

FIG 1A and 1B illustrate an example of the apparatus 10. The apparatus 10 comprises a first reception path 12 comprising a first low noise amplifier 14, a switching arrangement 40, a first downstream receiver circuitry 30_1 and a second downstream receiver circuitry 30_2.

FIG 1A illustrates the switching arrangement 40 in the first state 41. The switching arrangement 40 is configured to couple the first reception path 12 to the first downstream receiver circuitry 30_1 not the second downstream receiver circuitry 30_2.

FIG 1B illustrates the switching arrangement 40 in the second state 42. The switching arrangement 40 is configured to simultaneously couple the first reception path 12 to both the first downstream receiver circuitry 30_1 and the second downstream receiver circuitry 30_2.

In the second state 42, a received bandwidth 19 is processed as a plurality of overlapping bandwidths 19_1, 19_2 (See FIG 3). Each of the plurality of overlapping bandwidths 19_1, 19_2 is processed via a different one of the plurality of the multiple downstream receiver circuitry 30_1, 30_2. The bandwidth 19_1 is processed via the first downstream receiver circuitry 30_1. The bandwidth 19_2 is processed via the second downstream receiver circuitry 30_2.

FIG 2 illustrates an example of the apparatus 10 as previously described. The switching arrangement 40 is configured to couple/decouple the first reception path 12 to the second downstream receiver circuitry 30_2.

In the first state the switching arrangement 40 is configured to decouple the first reception path 12 and the second downstream receiver circuitry 30_2. In the second state the switching arrangement 40 is configured to couple the first reception path 12 and the second downstream receiver circuitry 30_2. The switching arrangement 40 in the second state is configured to simultaneously couple the first reception path 12 to both the first downstream receiver circuitry 30_1 and the second downstream receiver circuitry 30_2.

In this example, the first reception path 12 is permanently coupled to the first downstream receiver circuitry 30_1.

In the second state, a received bandwidth 19 is processed as a plurality of overlapping bandwidths 19_1, 19_2 (See FIG 3). Each of the plurality of overlapping bandwidths19_1, 19_2 is processed via a different one of the plurality of the multiple downstream receiver circuitry 30_1, 30_2. The bandwidth 19_1 is processed via the first downstream receiver circuitry 30_1. The bandwidth 19_2 is processed via the second downstream receiver circuitry 30_2.

FIG 3(i) illustrates an example where a received downlink signal 11 has received bandwidth 19.

FIG 3(ii) illustrates how the received downlink signal 11 having a received bandwidth 19 can be logically represented as two overlapping signals- first signal 11_1 having bandwidth 19_1 and second signal 11_2 having bandwidth 19_2.

FIG 3(iii) illustrates how the two overlapping signals 11_1, 11_2 can be separately processed. In this example, a different frequency shift is applied to the two overlapping signals 11_1, 11_2 to produce frequency-shifted signals 13_1, 13_2 that can be separately processed in separate downstream receiver circuitry 30_1, 30_2.

'Overlapping' means that a bandwidth overlaps with at least one other bandwidth. If there are three bandwidths (A, B, C) then A overlaps B and B overlaps C but A does not necessarily overlap C.

Thus, an irregular channel bandwidth 19 that does not match any preset regular filter bandwidth is converted into multiple overlapping signals 11_1, 11_2 that have reduced bandwidth 19_1, 19_2 matching preset regular filter bandwidths. In at least some examples, the preset regular filter bandwidths e.g., 19_1, 19_2 are specified by a telecommunications standard with which the apparatus 10 complies.

In at least some examples, the apparatus 10 is configured to control relative frequency offsets applied to the plurality of overlapping bandwidths 19_1, 19_2 before processing via one of the plurality of the multiple downstream receiver circuitry 30_1, 30_2. Each of the multiple downstream receiver circuitry 30_1, 30_2 is configured for separate demodulation of a respective overlapping bandwidth 19_1, 19_2. The apparatus 10 is configured to manage data overlap in the respective overlapping bandwidths 19_1, 19_2.

The apparatus 10 is therefore able to split an irregular bandwidth 19 into sub-bandwidths 19_1, 19_2, apply frequency-shifting to the sub-bandwidths 19_1, 19_2, perform separate demodulation for the frequency shifted sub-bandwidths and manage overlapping data.

The apparatus 10 is chopping up the spectrum 19 into two bandwidths 19_1 and 19_2. The apparatus 10 creates the frequency-shifted signals 13_1 and 13_2 from the received signal 11, where a frequency shift respectively separates their respective bandwidths 19_1 and 19_2. Since the preset regular analog filter does not support the irregular spectrum 19, a lesser bandwidth preset regular filter that matches 19_1 and 19_2 is used.

The apparatus 10 is configured to determine how to enable processing of the received bandwidth 19 as the plurality of overlapping bandwidths 19_1, 19_2.

The controller is configured to determine a number, a size and a frequency offset of the overlapping bandwidths 19_1, 19_2 to form the received bandwidth 19.

The apparatus 10 is also able to process a bandwidth that has been split by the network, for example, performing intraband non-contiguous carrier aggregation. In this example, the sub-bands 19_1, 19_2 are component carriers. The apparatus 10 can be configured to apply frequency-shifting to the sub-bandwidths (component carriers) and perform separate demodulation for the frequency shifted sub-bandwidths (frequency shifted component carriers). In this example there is no overlapping data.

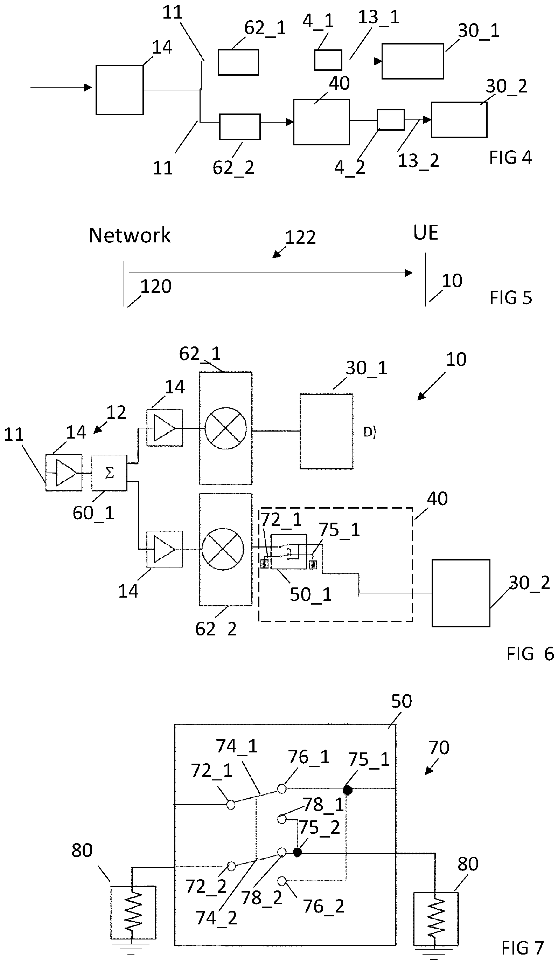

FIG 4 illustrates an example of the apparatus 10 as previously described.

In the second state, a received bandwidth 19 is processed as a plurality of overlapping bandwidths 19_1, 19_2 (see FIG 3). Each of the plurality of overlapping bandwidths 19_1, 19_2 is processed via a different one of the plurality of the multiple downstream receiver circuitry 30_1, 30_2. The bandwidth 19_1 is processed via the first downstream receiver circuitry 30_1. The bandwidth 19_2 is processed via the second downstream receiver circuitry 30_2.

First frequency shift circuitry 62_1 (a first mixer) introduces a first frequency shift to the received signal 11 having bandwidth 19. The filter 4_1 reduces the bandwidth to the bandwidth 19_1, producing the first frequency-shifted signals 13_1 for processing by the first downstream receiver circuitry 30_1. In some examples, the filter 4_1 is within the first downstream receiver circuitry 30_1.

Second frequency shift circuitry 62_2 (a second mixer) introduces a second frequency shift to the received signal 11 having bandwidth 19. The filter 4_2 reduces the bandwidth to the second bandwidth 19_2, producing the second frequency-shifted signal 13_2 for processing by the second downstream receiver circuitry 30_2. In some examples, the filter 4_2 is within the second downstream receiver circuitry 30_2.

In this example, the bandwidth 19 is an irregular bandwidth that occupies a spectrum which doesn't match any analogue filter bandwidth 4_1, 4_2 of the apparatus 10.

The bandwidth 19_1 and the bandwidth 19_2 of the signals 11_1, 11_2 are selected to match existing available filters 4_1, 4_2. The frequency shift applied between the signals 11_1, 11_2 is selected so that the frequency overlapping of the bandwidth 19_1 and bandwidth 19_2 cover the bandwidth 19 of the received signal 11.

The bandwidth 19 is greater than the bandwidth 19_1 and the bandwidth 19_2. The bandwidth 19_1 fits within a regular bandwidth of the predetermined analogue filter 4_1. The bandwidth 19_2 fits within a regular bandwidth of the predetermined analogue filter 4_2. In some but not necessarily all examples, the bandwidth 19_1 and the bandwidth 19_2 are the same bandwidth.

As illustrated in FIG 5, in some but not necessarily all example, the apparatus 10 is configured to place the switching arrangement 40 in the second state 42, to support reception of the bandwidth 19, in dependence upon a received network communication 122 configuring the received bandwidth 19.

In at least some examples, the network 120 sets requirements as regards non-contiguous intra-band carrier aggregation. In at least some examples, the network 120 configures non-contiguous intra-band carrier aggregation.

In at least some examples, the network 120 configures irregular bandwidth.

FIG 6 illustrates an example of the apparatus 10, similar to that described with reference to FIG 4.

The received signal 11 is split by splitter 60_1 into two along a path via a low-noise amplifier 14 and a first frequency shift circuitry 62_1 (first mixer) to be processed at first downstream receiver circuitry 30_1, and along a path via a low-noise amplifier 14 and a second frequency shift circuitry 62_2 (second mixer) to the switching arrangement 40 which controls whether or not the switched signal is processed at second additional downstream receiver circuitry 30_2.

In this example, the filter 4_1 (not illustrated) is within the first downstream receiver circuitry 30_1 and the filter 4_2 (not illustrated) is within the second downstream receiver circuitry 30_2.

The switching arrangement 40 is configured to enable coupling of the first reception path 12 to downstream receiver circuitry 30_2 by selectively coupling a first upstream node 72_1 coupled to the first reception path 12 and a first downstream node 75_1 coupled to the downstream receiver circuitry 30_2 and disable coupling of the first reception path 12 to the downstream receiver circuitry 30_2 by selectively decoupling the first upstream node 72_1 and the first downstream node 75_1 and terminating the first upstream node 72_1 to ground 80 and the first downstream node 75_1 to ground 80.

An example of a switch 50 that can be used as a switch 50_1 of the switching arrangement 40 is illustrated in FIG 7. Other examples of switches can be used.

The switch 50 illustrated in FIG 7 is a dual pole dual throw switch.

The switch 50 has a first switching state (illustrated) that enables coupling of an upstream reception path node 72_1 to a downstream receiver circuitry node 75_1 and a second switching state (not illustrated) that disables coupling of the upstream reception path node 72_1 to the downstream receiver circuitry node 75_1. The upstream reception path node 72_1 is an upstream node coupled to a reception path. The downstream receiver circuitry node 75_1 is a downstream node coupled to the downstream receiver circuitry 30.

The switching circuitry 50 also comprises a downstream ground terminating node 75_2 that is connected to ground 80 and an upstream ground terminating node 72_2 that is connected to ground 80.

The first 'closed' switching state (illustrated) interconnects:
(i) the upstream reception path node 72_1 and the downstream receiver circuitry node 75_1.
(ii) the downstream ground terminating node 75_2 and the upstream ground terminating node 72_2

The second 'open' switching state (not illustrated) couples:
(i) the upstream reception path node 72_1 and the downstream ground terminating node 75_2
(ii) downstream receiver circuitry node 75_1 and the upstream ground terminating node 72_2.

The selector 74_1 selectively couples the upstream reception path node 72_1 to either the downstream receiver circuitry node 75_1 or the downstream ground terminating node 75_2.

The selector 74_2 selectively couples the upstream ground terminating node 72_2 to either the downstream ground terminating node 75_2 or the downstream receiver circuitry node 75_1.

The selectors, 74_1 and 74_2, are controlled to change position together.

In this example, but not necessarily all examples, the switching circuitry 50 is a dual pole dual throw (DPDT) switch (also known as a double pole double throw switch). A first pole is the upstream reception path node 72_1. It has two throws, nodes 76_1 and 78_1. The node 76_1 is coupled to downstream receiver circuitry node 75_1. The node 78_1 is coupled to downstream ground terminating node 75_2. A second pole is the upstream ground terminating node 72_2. It has two throws, nodes 76_2 and 78_2. The node 78_2 is coupled to downstream ground terminating node 75_2. The node 76_2 is coupled to downstream receiver circuitry node 75_1.

A DPDT switch can be replaced by a combination of two single pole double throw (SPDT) switches or other switching arrangements.

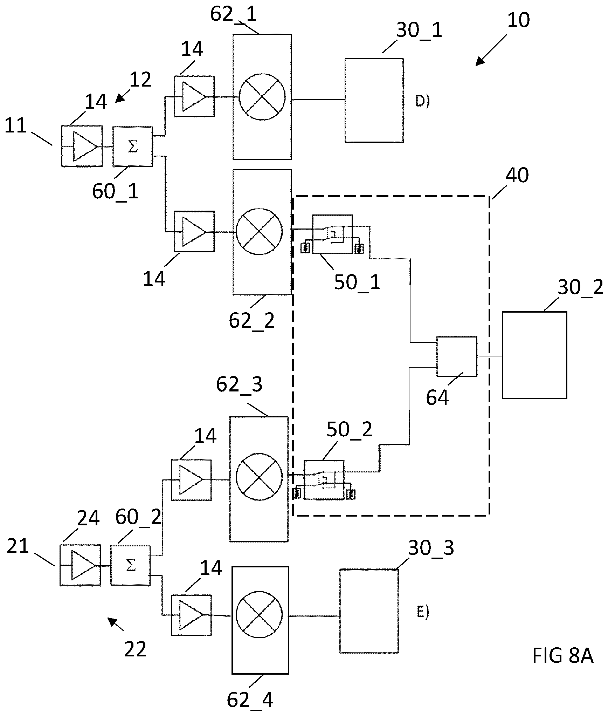

FIG 8A illustrates an example of the apparatus 10 as previously described. As previously described, the apparatus 10 comprises downstream receiver circuitry 30_1 for at least analogue filtering distinct from analogue filtering of the downstream receiver circuitry 30_2. In addition, it comprises downstream receiver circuitry 30_3 for at least analogue filtering distinct from analogue filtering of the downstream receiver circuitry 30_1 and distinct from the downstream receiver circuitry 30_2.

The received signal 11 is split by splitter 60_1 from the first reception path 12 along a path via a low-noise amplifier 14 and frequency shift circuitry 62_1 (first mixer) to downstream receiver circuitry 30_1 and along a path via a low-noise amplifier 14 and the frequency shift circuitry 62_2 (second mixer) to the switching arrangement 40.

The received signal 21 is split by splitter 60_2 from the second reception path 22 along a path via a low-noise amplifier 14 and frequency shift circuitry 62_4 (a mixer) to downstream receiver circuitry 30_3 and along a path via a low-noise amplifier 14 and the frequency shift circuitry 62_3 (a mixer) to the switching arrangement 40.

The switching arrangement 40 comprises:
a first switching circuitry 50_1 configured to have a first switching state that enables coupling of the first reception path 12 to the downstream receiver circuitry 30_2 and a second switching state that disables coupling of the first reception path 12 to the downstream receiver circuitry 30_2; and
a second switching circuitry 50_2 configured to have a first switching state that enables coupling of the second reception path 22 to the downstream receiver circuitry 30_2 and a second switching state that disables coupling of the second reception path 22 to the downstream receiver circuitry 30_2.

A switching state that couples the first reception path 12 but not the second reception path 22 to the downstream receiver circuitry 30_2 comprises a first switching state of the first switching circuitry 50_1 and a second switching state of the second switching circuitry 50_2.

A switching state that couples the second reception path 22 but not the first reception path 12 to the downstream receiver circuitry 30_2 comprises a second switching state of the first switching circuitry 50_1 and a first switching state of the second switching circuitry 50_2.

The switching arrangement 40 is configured in one state to couple the first reception path 12 to one of the multiple downstream receiver circuitry 30_1 and to couple the second reception path 22 to a plurality of the multiple downstream receiver circuitry 30_3,30_2.

The switching arrangement 40 is configured in another state to couple the first reception path 12 to a plurality of the multiple downstream receiver circuitry 30_1, 30_2 and to couple the second reception path 22 to one of the multiple downstream receiver circuitry 30_3.

The switching arrangement 40 is configured in another state to couple the first reception path 12 to one of the plurality of the multiple downstream receiver circuitry 30_1 and to couple the second reception path 22 to another one of the multiple downstream receiver circuitry 30_3.

The downstream receiver circuitry 30_2 can therefore be used by either the first reception path 12 or the second reception path 22

In some but not necessarily all examples, the switching arrangement is additionally configured to enable the simultaneous coupling of the first reception path 12 and the second reception path 22 to the same downstream receiver circuitry 30_2.

The second switching circuitry 50_2 is very similar to the first switching circuitry 50_1. The second switching circuitry enables coupling of the second reception path 22 to the downstream receiver circuitry 30_2 by selectively coupling a second upstream node coupled to the second reception path 22 and a second downstream node coupled to the downstream receiver circuitry 30_2 and disable coupling of the second reception path 22 to the downstream receiver circuitry 30_2 by selectively decoupling the second upstream node and the second downstream node and terminating the second upstream node to ground and the second downstream node to ground. It can be implemented as a DPDT switch or similar.

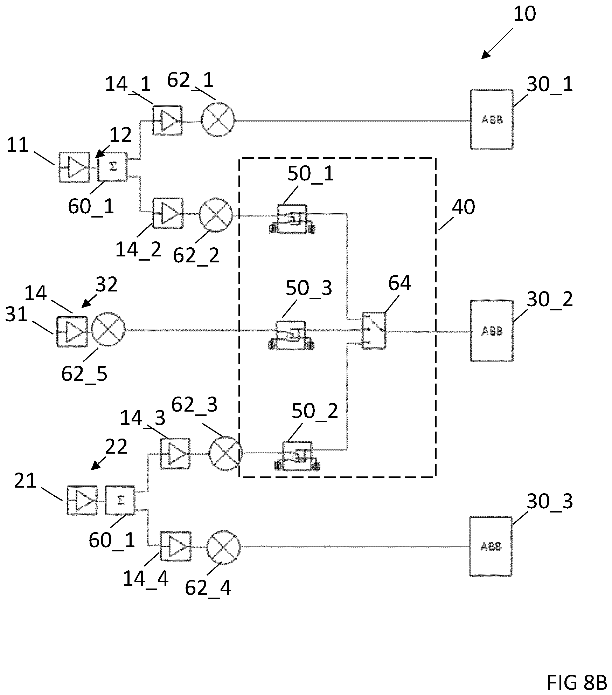

FIG 8B illustrates an example of the apparatus 10 as previously described with reference to FIG 8A.

The apparatus 10 additionally has a third reception path 32 for selectively directing received signals 31 to the downstream receiver circuitry 30_2 via a low-noise amplifier 14 and frequency shift circuitry 62_5 (a mixer) to the switching arrangement 40. The switching arrangement 40 controls the onward coupling to the downstream receiver circuitry 30_2.

The switching arrangement 40 comprises a third switching circuitry 50_3 configured to have a first switching state that enables coupling of the third reception path 32 to the downstream receiver circuitry 30_2 and a second switching state that disables coupling of the third reception path 32 to the downstream receiver circuitry 30_2.

A switching state of the switching arrangement 40 can use the switching circuitry 50_1, 50_2, 50_3, 64 to couple any one of the first reception path 12, the second reception path 22 or the third reception path 32 to the downstream receiver circuitry 30_2.

The downstream receiver circuitry 30_2 can therefore be used by the first reception path 12, the second reception path 22 or the third reception path 32.

The third switching circuitry 50_3 is very similar to the first switching circuitry 50_1. The third switching circuitry enables coupling of the third reception path 32 to the downstream receiver circuitry 30_2 by selectively coupling a third upstream node coupled to the third reception path 32 and a third downstream node coupled to the downstream receiver circuitry 30_2 and disable coupling of the third reception path 32 to the downstream receiver circuitry 30_2 by selectively decoupling the third upstream node and the third downstream node and terminating the third upstream node to ground and the third downstream node to ground. The third switching circuitry can, for example, be implemented as a DPDT switch or similar.

The switching arrangement 40 enables complex carrier aggregation combinations such as inter band carrier aggregation or intra-band carrier aggregation.

Carrier aggregation is expanded by providing a third reception path 32 comprising a third low noise amplifier 14.

It will therefore be appreciated that switching arrangement 40 can make the third reception path 32 (and downstream receiver circuitry 30_2) available for carrier aggregation.

However, when the switching arrangement 40 makes the downstream receiver circuitry 30_2 available to the first reception path 12 or the second reception path 22, the third reception path 32 is not available for carrier aggregation.

In some examples, the third reception path 32 is used for at least demanding carrier aggregation and has a low probability of use. This makes its downstream receiver circuitry 30_2 more often available for use by the first reception path 12 or the second reception path 22.

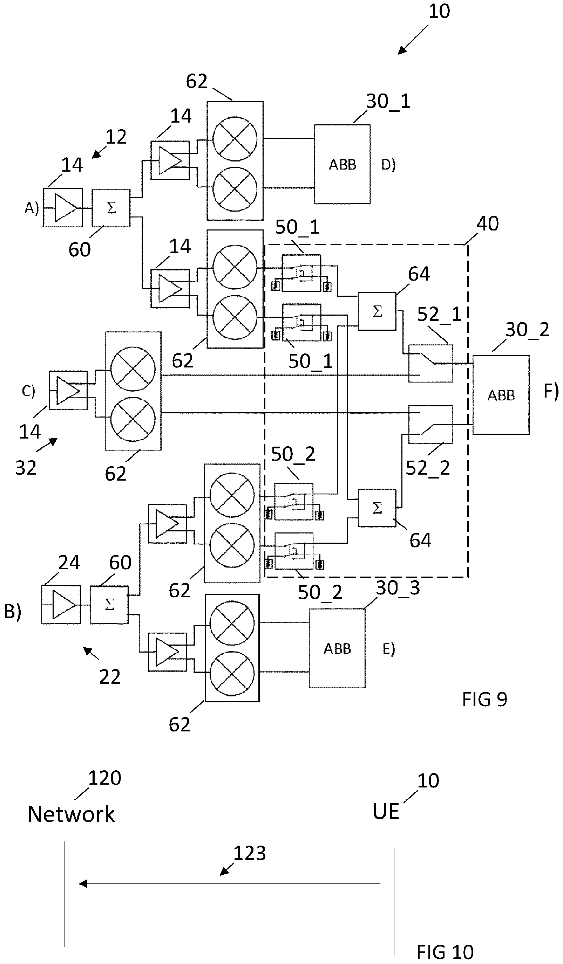

FIG 9 illustrates an example of the apparatus 10 as previously described with reference to FIG 8B. However, in this example, the apparatus 10 is configured for frequency division of the reception paths 12, 22, 32. Frequency division of a reception path can also be implemented in any of the previous examples.

Each reception path 12, 22, 32 is split into multiple frequency separated paths that are switched separately.

As illustrated in FIG 10 in at least some examples the apparatus 10 is configured to send a communication 123 informing the network 120 of an update to its reported capability. In this example, the apparatus 10 is user equipment (UE) of a 3GPP New Radio and the network node 120 is a base station (e.g., gNB) of 3GPP New Radio. The capability of an apparatus 10 for carrier aggregation can be signaled to a network node. The capability of an apparatus 10 for carrier aggregation will change as the apparatus uses available downstream receiver circuitry 30_2. For example, the apparatus 10 can decide to configure each one of the paths 12, 22, 32 to use a respective single downstream receiver circuitry 30_1, 30_3, 30_2. The apparatus 10 can alternatively decide to configure one of the paths 12, 22 to use two downstream receiver circuitry, including downstream receiver circuitry 30_2, in parallel. In response to the apparatus 10 deciding to change how it uses downstream receiver circuitry 30_2 (i.e. enable/disable three path carrier aggregation) then, the apparatus 10 can communicate 123 this change to the network 120.For non-contiguous intra-band carrier aggregation, where there is little or no interference in a frequency gap between different component carriers, then a wideband filter can be used with a single downstream receiver circuitry 30, to receive and demodulate the component carriers simultaneously. Where there is interference above a threshold in a frequency gap between different component carriers, then a narrow band filter can be used with different, distinct, downstream receiver circuitry 30, 30_1, 30_2 to separately receive and demodulate the component carriers.

Referring to FIG 9, in a typical 3 carrier aggregation (CA) configuration the bands would map A) to D), B) to E) and C) to F). However, the apparatus 10 allows also that a non-contiguous intra-band carrier aggregation with a distance between the two component carriers to be split in the cases A) to D) & F) or B) to E) & F). Such a split allows perfect channel filtration of each component carrier within the distinct downstream receiver circuits 30 thereby fully suppressing the potential interference in the gap between the carriers. The split path capability allows the path 12, 22 from the front end arriving at the transceiver interface at a single reception port to be accessible to two distinct downstream receiver circuits 30.

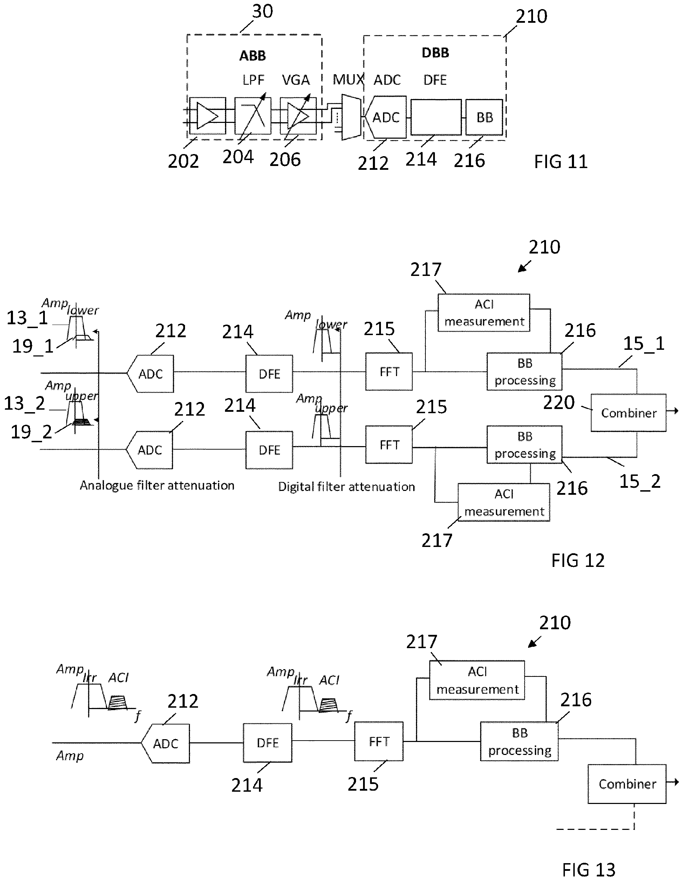

FIG 11 illustrates an example of downstream receiver circuitry 30. The downstream receiver circuitry 30 is analogue baseband (ABB) circuitry. The downstream receiver circuitry 30 prepares the received signals for analogue to digital conversion and demodulation by digital baseband (DBB) circuitry 210.

The downstream receiver circuitry 30 comprises, in this example: an operational amplifier 202; an analogue lowpass filter (LPF) 204; a variable gain amplifier (VGA) 206 for level control; a multiplexer (MUX); an analogue to digital converter (ADC) 212; a digital channel filter (DFE) 214;
and baseband (BB) circuitry interface 216.

The operational amplifier 202 translates the impedance from radio frequency to baseband (BB) favorable levels.

The analogue filter 204 has a preset regular filter bandwidth e.g., bandwidth 19_1, 19_2 rather than irregular bandwidth 19. A pre-set regular filter bandwidth e.g., 19_1, 19_2 is specified by a telecommunications standard with which the apparatus 10 complies. In this example, the analogue filter 204 is adjustable to have any of the preset, standardized regular filter bandwidths.

The variable gain amplifier 206 is for level control. The analogue to digital converter (ADC) converts from the analogue domain to the digital domain. The digital channel filter 214 provides for noise and adjacent channel suppression, and the baseband circuitry interface 216 is the digital interface that transfers the signal from the transceiver chip to the baseband modem processors which can, for example, be in different integrated circuits.

The downstream receiver circuitry 30 comprises the operational amplifier 202, the analogue filter 204 and the variable gain amplifier 206 for level control.

The digital baseband circuitry 210 comprises the analogue to digital converter (ADC) 212, the digital channel filter 214 and the baseband circuitry interface 216 to baseband circuitry for demodulating the received signal.

The filter 204 can be implemented as a low-pass filter that creates a pass band at DC or as a passband, for example, a notch-type filter than passes frequencies in one passband but does not pass frequencies above or below that pass band.

As illustrated in FIGs 12 and 13, there may also be a transform 215 between the time and frequency domains.

As illustrated in FIG 12, the apparatus 10 can, for example, comprises digital demodulation circuitry 210 configured to demodulate first signals 13_1 (regular bandwidth 19_1) received via the first reception path 12 and second signals 13_2 (regular bandwidth 19_2) received via the second reception path 22 using separate demodulation for the first signals 13_1 and for the second signals 13_2.

The digital filter 214 used for the first signals from the first reception path 12 is configured as a narrow band digital filter. The digital filter 214 used for the second signals from the second reception path 22 is configured as a narrow band digital filter.

After demodulation 216, the demodulated first signals 15_1 and the demodulated second signals 15_2 are combined at combiner 220 to recreate the irregular bandwidth 19. The demodulated first signals and the demodulated second signals are, for example, combined by ignoring a first half of the overlapping part for the demodulated first signals 15_1 and ignoring a second half of the overlapping part for the demodulated second signals 15_2.

This implementation of digital baseband processing allows the apparatus 10 to combine the spectrums 19_1, 19_2 from different down conversion processes, that introduce phase discontinuity in the spectrum. Any phase mismatch between the spectrum parts coming from the separate paths with independent mixers can be compensated by having separate channel estimation and demodulation for each path before combining the two parts.

The apparatus 10 can, for example, comprises digital demodulation circuitry 210 that is configured to demodulate signals received via a first reception path using either
i) separate demodulation for the first signals 13_1 and for the second signals 13_2 (FIG 12) or
ii) using single simultaneous demodulation for the first signals and for the second signals (FIG 13).

As illustrated in FIG 13, the apparatus 10 can, for example, comprises digital demodulation circuitry 210 configured to demodulate first signals received via the first reception path 12 or second signals received via the second reception path 22 using single simultaneous demodulation after wide band analogue filtration at filter 204.

In at least some examples, the determination of whether to use (i) separate demodulation or (ii) single demodulation is based upon a measurement of intermediate interference at frequencies intermediate of the frequencies of the first signals and the frequencies of the second signals. In dependence upon determining that intermediate interference exceeds a threshold, the apparatus 10 switches from the single demodulation using a wider analogue filter (FIG 13) to the separate demodulation using narrower analogue filters (FIG 12).

In the examples illustrated, interference measurement circuity 217 is used to measure intermediate interference. The intermediate interference in these examples is between aggregation channels and is termed adjacent channel interference (ACI).

One example of interference measurement is to measure reference signal received power (RSRP) on sub-carriers corresponding to the gap between two component carriers. If the interference level is above a certain threshold, then configuration can be changed to use more ABB circuits 30.

When using single demodulation (FIG 13), it is desirable to monitor the interference level of the adjacent channel in the unattenuated part of the analogue filter bandwidth to avoid the ADC 212 being driven into saturation due to strong adjacent channel interference (ACI). This is done by first configuring the digital filter 214 to allow part of the adjacent channel spectrum to be included in its output to the FFT (Fast Fourier Transform) block 215. The ACI measurement block 217 can then be configured to do a RSRP measurement on the output of FFT on those sub-carriers which corresponds to the adjacent channel spectrum.

It will be appreciated from the foregoing examples, that the apparatus 10 can provide for flexible bandwidths and flexible non-contiguous intra-band carrier aggregation. It enables utilization of licensed spectrum that is not aligned with existing specified channel bandwidths.

As applied to bandwidth separation at the UE, for example for irregular bandwidths, the apparatus 10 is configured to:
place the switching arrangement 40 in a second state (FIG 1B) in dependence upon a determination that more than one downstream receiver circuitry 30 is available and there is interference in frequencies adjacent the received bandwidth 19, and isolate the plurality of separated bandwidths 19_1, 19_2 using filters 204, individually having a bandwidth equal to the separated bandwidths 19_1, 19_2, for separate digital demodulation (FIG 12);
place the switching arrangement 40 in a first state (FIG 1A) in dependence upon a determination that more than one downstream receiver circuitry 30 is not available or determination that there is not sufficient interference in frequencies adjacent the received bandwidth 19, and apply a filter, having a bandwidth greater than or equal to the first received bandwidth, to receive the bandwidth, for digital demodulation.

As applied to non-contiguous intra-band carrier aggregation (bandwidth separation at the network), the apparatus 10 comprises means for determining reception interference at frequencies between a first bandwidth (first component carrier) and a second bandwidth (second component carrier) and on the basis of the determined interference select either single demodulation using a wider analogue filter (FIG 13) or separate demodulation using narrower analogue filters (FIG 12).

The apparatus 10 comprises:
a first reception path 12 comprising a first low noise amplifier 14;
multiple downstream receiver circuitry 30;
a switching arrangement 40 configured to, in a first state, couple the first reception path 12 to one of the multiple downstream receiver circuitry 30 and configured to, in a second state, simultaneously couple the first reception path 12 to a plurality of the multiple downstream receiver circuitry 30;
a controller configured to:
   determine reception interference at frequencies between a first bandwidth and a second bandwidth;
   if the determined interference is below a threshold, place the switching arrangement 40 in the first state to support processing of the first bandwidth and the second bandwidth as a single bandwidth at one of the plurality of the multiple downstream receiver circuitry 30 (FIG 13);
   if the determined interference is above a threshold, place the switching arrangement 40 in the second state to support processing of the first bandwidth as a single bandwidth at one of the plurality of the multiple downstream receiver circuitry 30 and processing of the second bandwidth as a single bandwidth at a different one of the plurality of the multiple downstream receiver circuitry 30 (FIG 12).

It can be used to flexibly fit an arbitrary channel bandwidth and an arbitrary frequency range.

It is particularly useful for fulfilling irregular bandwidth (BW) requirements in the frequency division duplex (FDD) low band (LB) in third generation partnership project (3GPP) specifications.

The apparatus 10, is configured to simultaneously couple the first reception path 12 providing signals in a first frequency band 19_1 and signals in a second frequency band 19_2 to respective downstream receiver circuitry 30_1, 30_2, wherein the first frequency band 19_1 and the second frequency band 19_2 overlap to create the irregular frequency band 19.

The irregular frequency band 19 better utilizes available spectrum than the first frequency band 19_1 or the second frequency band 19_2. The same data can be in the overlap.

The first frequency band 19_1 lies within a bandwidth of a first predetermined filter 4_1 and the second frequency band 19_2 lies within a bandwidth of a second predetermined filter 4_2 and the irregular frequency band 19 does not lie within the bandwidth of the first predetermined filter 4_1 or lie within the bandwidth of the second predetermined filter 4_2.

In at least some examples, the apparatus 10 is configured to determine a state of the switching arrangement 40 in dependence upon any one or more of:
network requirements as regards non-contiguous intra-band carrier aggregation;
network configured irregular bandwidth;
availability of downstream receiver circuitry 30;
interference.

For example, a user equipment 10 can adapt to network configuration for irregular bandwidth. The UE can react to the configured channel by:
i) using the next wider channel bandwidth analogue filter (a preset regular bandwidth filter), thereby occupying only 1 ABB circuit 30, but sacrificing adjacent channel interference attenuation. Using the next wider channel bandwidth allows the UE to support the reported CA configuration list upon network registration.
ii) Using two receive chains for irregular bandwidth support when:
   there are one or more available ABB circuits 30;
   there's a strong intermediate interference (ACI) that requires attenuation;
   there's network support to reduce supported carrier aggregation configurations dynamically subtracting one component carrier from the reported carrier aggregation configuration list upon network registration.

The UE 10 can adapt to network configuration for non-contiguous intraband carrier aggregation. The UE 10 can react to the configured component carriers by:
using two ABB circuits 30 when there's one or more ABB circuits 30 available to improve non-contiguous intraband carrier aggregation component carrier filtration in the analogue filters of the ABB circuit 30, there's network support to reduce supported carrier aggregation configurations dynamically subtracting one component carrier from the reported carrier aggregation configuration list upon network registration.

In the foregoing, in some examples, a reception path 12 can be associated with a particular antenna or antenna port. In the foregoing, in some examples, a reception path 12 can be associated with any one of a plurality of antennas or antenna ports. In at least some examples, there are different antennas (antenna ports) used for different reception paths.

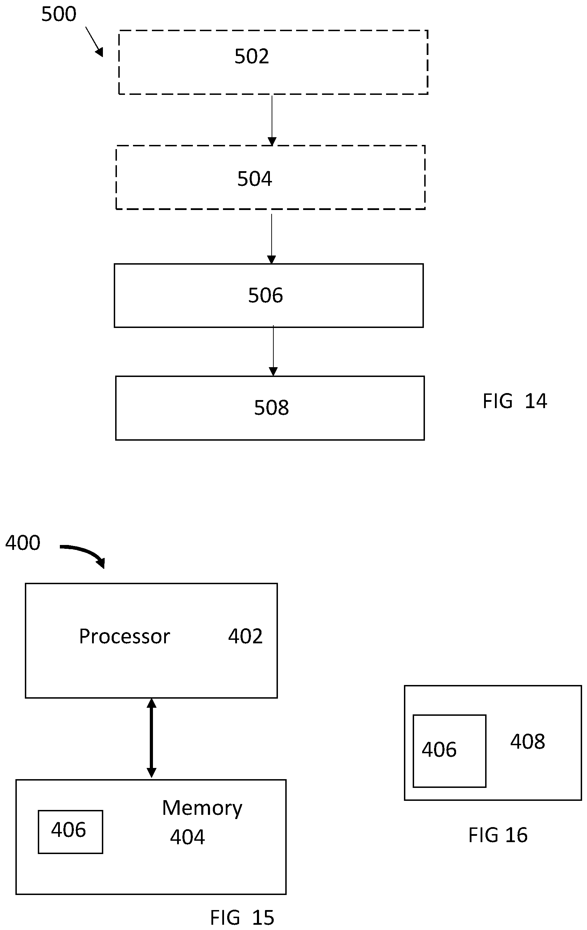

FIG 14 illustrates an example of a method 500. The method 500 comprises at block 506 splitting a reception path associated with a received bandwidth 19 into a plurality of reception paths associated with overlapping first and second bandwidths 19_1, 19_2. The method 500 then comprises at block 508, processing each of the plurality of reception paths via different downstream receiver circuitry 30_1, 30_2.

In at least some examples, the method additionally comprises at block 502 measuring interference to be above a threshold value in a frequency range within the received bandwidth between the bandwidth 19_1 and the bandwidth 19_2.

In at least some examples, the method additionally comprises at block 504 informing the network of an intention or desire to use the downstream receiver circuitry.

Fig 15 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 14 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 10 comprises:
at least one processor 402; and
at least one memory 404 including computer program code
the at least one memory 404 and the computer program code configured to, with the at least one processor 402, cause the apparatus 10 at least to perform:
   causing a switching arrangement 40 to split a reception path associated with a received bandwidth 19 into a plurality of reception paths associated with overlapping bandwidths 19_1, 19_2 and enable processing each of the plurality of reception paths via different downstream receiver circuitry 30_1, 30_2.

The apparatus 10 comprises:
at least one processor 402; and
at least one memory 404 including computer program code,
the at least one memory storing instructions that, when executed by the at least one processor 402, cause the apparatus at least to:
   cause a switching arrangement 40 to split a reception path associated with a received bandwidth 19 into a plurality of reception paths associated with overlapping bandwidths 19_1, 19_2 and enable processing each of the plurality of reception paths via different downstream receiver circuitry 30_1, 30_2.

As illustrated in Fig 16, the computer program 406 may arrive at the apparatus 10 via any suitable delivery mechanism 408. The delivery mechanism 408 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:
causing a switching arrangement 40 to split a reception path associated with a received bandwidth 19 into a plurality of reception paths associated with overlapping bandwidths 19_1, 19_2 and enable processing each of the plurality of reception paths via different downstream receiver circuitry 30_1, 30_2.

The computer program instructions may be comprised in a computer program, a non-transitory computer readable medium, a computer program product, a machine-readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

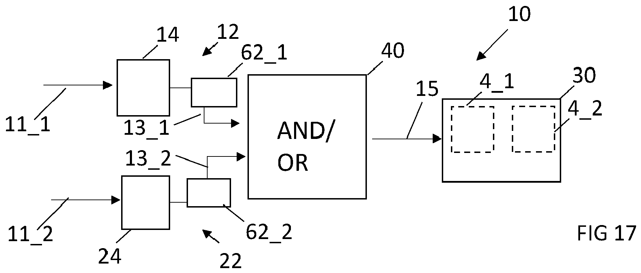

FIG 17 illustrates an example of an apparatus 10 for simultaneously coupling a first reception path 12 and a second reception path 22 to downstream receiver circuitry 30.

The apparatus 10 comprises: a first reception path 12 comprising a first low noise amplifier 14; a second reception path 22 comprising a second low noise amplifier 24; and downstream receiver circuitry 30.

The apparatus 10 also comprises a switching arrangement 40 configured to have:
a state that couples the first reception path 12 but not the second reception path 22 to the downstream receiver circuitry 30; and
a state that couples the second reception path 22 but not the first reception path 12 to the downstream receiver circuitry 30.

Optionally, the switching arrangement 40 is also configured to have a state that simultaneously couples the first reception path 12 and the second reception path 22 to the downstream receiver circuitry 30. A frequency shift can be introduced between the first reception path 12 and the second reception path 22.

For example, first frequency shift circuitry 62_1 (first mixer) can introduce a first frequency shift and second frequency shift circuitry 62_2 (second mixer) can introduce a second frequency shift.

The apparatus 10 can therefore be configured to simultaneously couple the first reception path 12 providing signals in a first frequency band 19_1 and the second reception path 22 providing signals in a second frequency band 19_2 to the downstream receiver circuitry 30.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (I) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The apparatus 10 can be a module.

The apparatus 10 can be a user equipment. The user equipment can be a mobile telephone, cellular telephone, Internet of Things device etc.

The apparatus 10 can be any suitable device, apparatus or system. In at least some examples, the apparatus 10 is a hand-portable apparatus. A hand-portable apparatus is an apparatus than can be used while held in one hand and operated by another hand. In at least some examples, the hand-portable apparatus has a mass less than 0.5 kg. In at least some examples, the apparatus 10 is additionally a pocket-portable apparatus. A pocket-portable apparatus is an apparatus than can fit into a pocket in clothing. In at least some examples, the pocket-portable apparatus has a length less than 20cm, a width less than 10cm and a depth less than 3 cm.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connects', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
a first reception path comprising a first low noise amplifier;
multiple downstream receiver circuitry;
a switching arrangement configured to, in a first state, couple the first reception path to
one of the multiple downstream receiver circuitry and configured to, in a second state, simultaneously couple the first reception path to a plurality of the multiple downstream receiver circuitry;
a controller configured to place the switching arrangement in the second state to support reception of a first bandwidth, wherein the switching arrangement is configured in the second state to enable processing of the received first bandwidth as a plurality of overlapping bandwidths wherein each of the plurality of overlapping bandwidths is processed via one of the plurality of the multiple downstream receiver circuitry.

2. An apparatus as claimed in claim 1, wherein the controller is configured to place the switching arrangement in the second state, to support reception of the first bandwidth, in dependence upon a received network communication configuring the received first bandwidth.

3. An apparatus as claimed in claim 1 or 2, wherein the controller is configured to determine a state of the switching arrangement in dependence upon any one or more of:
network requirements as regards non-contiguous intraband carrier aggregation;
network configured irregular bandwidth;
availability of downstream receiver circuitry;
interference, if any, in frequencies adjacent the received first bandwidth.

4. An apparatus as claimed in any preceding claim, wherein the controller is configured to determine how to enable processing of the received first bandwidth as the plurality of overlapping bandwidths.

5. An apparatus as claimed in any preceding claim, wherein the received first bandwidth is an irregular channel bandwidth and does not match any preset regular filter bandwidth and each of the plurality of overlapping bandwidths does match a preset regular filter bandwidth.

6. An apparatus as claimed in any preceding claim, configured to control relative frequency offsets applied to the plurality of overlapping bandwidths before processing via the multiple downstream receiver circuitry.

7. An apparatus as claimed in any preceding claim, wherein each of the multiple downstream receiver circuitry is configured for separate demodulation of a respective overlapping bandwidth.

8. An apparatus as claimed in any preceding claim, wherein the controller is configured to:
place the switching arrangement in a second state in dependence upon a determination that more than one downstream receiver circuitry is available and there is interference in frequencies adjacent the received first bandwidth, and isolate a plurality of separated bandwidths using filters, individually having a bandwidth equal to the separated bandwidths, for separate digital demodulation;
place the switching arrangement in a first state in dependence upon a determination that more than one downstream receiver circuitry is not available or determination that there is not sufficient interference in frequencies adjacent the received first bandwidth, and apply a filter, having a bandwidth greater than or equal to the first received first bandwidth, to receive the bandwidth, for digital demodulation.

9. An apparatus as claimed in any preceding claim, wherein the controller is configured to:
update capability information provided to a network in dependence upon a determination that more than one downstream receiver circuitry is not available and there is interference in frequencies adjacent the received first bandwidth.

10. An apparatus as claimed in any preceding claim, wherein the switching arrangement is configured to enable coupling of the first reception path to first downstream receiver circuitry by selectively coupling a first upstream node coupled to the first reception path and a first downstream node coupled to the first downstream receiver circuitry and disable coupling of the first reception path to the first downstream receiver circuitry by selectively decoupling the first upstream node and the first downstream node and terminating the first upstream node to ground and the first downstream node to ground.

11. An apparatus as claimed in claim 10, comprising a second reception path comprising a second low noise amplifier, wherein the controller is configured to enable coupling of the second reception path to the first downstream receiver circuitry by selectively coupling a second upstream node coupled to the second reception path and a second downstream node coupled to the downstream receiver circuitry and disable coupling of the second reception path to the first downstream receiver circuitry by selectively decoupling the second upstream node and the second downstream node and terminating the second upstream node to ground and the second downstream node to ground.

12. An apparatus as claimed in claim 11, wherein the switching arrangement comprises:
a first switching circuitry configured to have a first switching state that enables coupling of the first reception path to the first downstream receiver circuitry and a second switching state that disables coupling of the first reception path to the first downstream receiver circuitry;
a second switching circuitry configured to have a first switching state that enables coupling of the second reception path to the first downstream receiver circuitry and a second switching state that disables coupling of the second reception path to the first downstream receiver circuitry,
wherein a switching state that couples the first reception path but not the second reception path to the first downstream receiver circuitry comprises a first switching state of the first switching circuitry and a second switching state of the second switching circuitry; and
a switching state that couples the second reception path but not the first reception path to the first downstream receiver circuitry comprises a second switching state of the first switching circuitry and a first switching state of the second switching circuitry.

13. An apparatus as claimed in claim 11 or 12, wherein the switching arrangement is configured in one state to couple the second reception path to one of the multiple downstream receiver circuitry or in another state simultaneously couple the second reception path to a plurality of the multiple downstream receiver circuitry.

14. A method comprising:
splitting a reception path associated with a received bandwidth into a plurality of reception paths associated with overlapping bandwidths; and
processing each of the plurality of reception paths via different downstream receiver circuitry.

15. A computer program comprising instructions that when run by one or more processors causes a switching arrangement to split a reception path associated with a received bandwidth into a plurality of reception paths associated with overlapping bandwidths and enable processing each of the plurality of reception paths via different downstream receiver circuitry.
